# EUROPEAN PATENT APPLICATION

(11) **EP 2 270 761 A1**
(43) Date of publication of application: **05.01.2011**
(21) Application number: 09164345.2
(22) Date of filing: 01.07.2009
(51) Int. Cl.: G08B 13/196, G08B 31/00

(54) **System architecture and process for tracking individuals in large crowded environments**

(71) Applicant: THALES, 92200 Neuilly-sur-Seine (FR)
(72) Inventor: Silva Gomes, Carlos Evaristo, 2770-153, Paço de Arcos (PT); Rocha Azevedo, Flavio Miguel, 2770-153, Paço de Arcos (PT); De Sousa Vicente, Jorge Paulo, 2770-153, Paço de Arcos (PT); De Sousa Medina, Liliana Agapito, 2770-153, Paço de Arcos (PT); Fernandes Ferreira, Marco Paulo, 2770-153, Paço de Arcos (PT); Ribeiro Fernandes, Tiago Miguel, 2770-153, Paço de Arcos (PT)
(74) Representative: Lucas, Laurent Jacques

(57) **Abstract**

System architecture (200) allowing implementing a process for tracking individuals present in an area under surveillance (100) based upon a plurality of ID sensors (211) and/or tracking sensors (213), and further allowing display to an operator of a bidimensional overview of the area under surveillance (200) and individuals present therein.

## Description

The current invention relates to a system architecture and process for tracking individuals in large crowded environments. Further, it is an object of the current invention to provide an integrated hardware and software architecture allowing display to an operator of an overview of an area under surveillance, with exhaustive identification of all individuals in presence therein, as well as their respective current locations; but also allowing detection of specific events associated with these individuals' movements, or specific behaviours thereof.

In some environments populated by large numbers of individuals, it may be highly desirable to know where the individuals are, and how a given individual is behaving within the environment. This statement is particularly true in public areas requiring a certain level of security and/or a certain level of efficiency, for example in terms of fluxes of individuals among various subareas constituting the area under surveillance.

For example, airports are typical environments wherein a system allowing tracking of individuals, and possibly detection of certain events associated with said individuals, is particularly useful: for obvious security purposes, but also for efficiency purposes. Indeed, there are situations that typically cause delays in flight departures. In most cases such delays are a possible source for undesirable expenses by airline companies and airport operating companies, as well as for passengers' discomfort. Serious delays may even lead to more serious consequences. Therefore, the ability for an operator to locate a given passenger in a crowded environment would allow such desirable actions as reaching almost immediately a given passenger who continuously fails to respond to a boarding message, or taking out from an airplane the luggage belonging to a passenger who has actually left the airport as soon as this event is detected, or addressing a specific passenger for a luggage check without disturbing or alarming other passengers. A system allowing tracking of individuals would also be of major usefulness in an airport area, where tracking of individuals having malicious intents would allow preventing the occurrence of malicious acts with a potentially dramatic impact. As it has been lately revealed, in some cases a person intending to cause damage in a public space is not even known to be a threat. It is therefore of great importance to be able to detect or get a warning when a person acts in a suspicious way, or has suspicious movements.

Over the last years there has been a shift in the video surveillance paradigm from "investigation of incidents" to prevention of potentially catastrophic incidents. This shift is giving origin to intelligent or smart video surveillance systems. This invention follows such a new approach, its main drivers being the automated analysis of large amounts of video data and the availability of intelligent analysis tools, for example behaviour detection or space occupancy density.

There are currently existing techniques allowing tracking of a given individual. For example, some techniques are resorting to video cameras, and allow an operator to visually track an individual, by means of a plurality of display screens. These techniques require that the operator be properly trained and experienced, as it has been revealed that an operator who is continuously watching a plurality of display screens will loose his attention within a few minutes.

With further advanced video surveillance systems, the operator may be able to zoom in so as to focus on a given individual or small group of individuals, and then track this individual on a display screen by means of a joystick that allows control of motorized video cameras.

With even further advanced video surveillance systems, a dedicated digital video processing and control software allows automatically targeting a given individual and controlling video cameras so as to remain focussed thereon as he is being moving within the sight of a given video camera or even plural video cameras. Such techniques require the operator to focus on a given individual on purpose, for example after noticing a suspicious behaviour.

With even further advanced video surveillance systems, a dedicated digital video processing software is able to automatically detect the presence of an individual within the sight of video cameras, for instance based upon facial recognition techniques. However, such techniques require much computational power. They may apply to a small number of individuals or eventually to small groups of individuals, but do not allow global tracking of a crowded population of individuals within the area under surveillance.

Some existing techniques allow detecting the presence of individuals in the proximity of given sensors. Such techniques for example rely on the use of infrared or ultrasound sensors. Presence sensors offer the advantage of being cheap, and can be placed in locations known to have a typical approach pattern. However, such sensors simply allow detecting the presence of an object in their sight at a given moment, but do not provide any further information on the nature of the object, nor on the identity of a detected person.

Some existing techniques allow identifying individuals within the sight of sensors. Such techniques can be based upon the use of identity sensors, hereinafter referred to as ID sensors. However, these techniques require that the individuals to be identified are all bringing or wearing specific unique identifiers, for example passive radiofrequency identification tags, hereinafter referred to as passive RFID tags. Besides, these kinds of sensors have a limited range, and only provide with information about one individual having gone through, or in the close vicinity of, a specific reading or control point.

It shall be taken into consideration that a common issue related to the use in public places of sensors of the various types cited above, is that it is highly desirable that these sensors shall be preferably chosen so as to be as much invisible as possible. Indeed, individuals shall not be advised or warned about the current use of a sensor, nor should they be explicitly involved in the tracking process. For legal and ethical reasons also, the sensors shall be chosen so as not to provide any personal or private information about the individuals in their sight. Also, it is desirable that the sensors involved in a surveillance system are cheap, notably when they are used in a surveillance system covering large public areas. It is as well desirable that the required hardware, on which the tracking process relies on, is reasonably cheap. Finally, the installation and maintenance of sensors shall preferably be as much cheap as possible, and shall not require specific training of people in charge, nor the use of specific tools.

One purpose of the current invention is to overcome the drawbacks that are inherent to the different existing types of sensors allowing to locate, identify and track individuals.

For that purpose, it is an object of the current invention to provide an operator in charge of surveillance of a large crowded area, with a system allowing an overview in real-time of the individuals within the area, as well as the ability to identify, follow and track them. It is another object of the invention to allow detecting some events or possible unexpected behaviours of given individuals. To that end, the present invention proposes a system architecture for tracking individuals in crowded areas based upon a plurality of input individual ID sensors and/or individual tracking sensors placed at determined locations over an area under surveillance, said system architecture comprising at least:
● a database,
● a processing layer comprising at least a sensor processing module, a high-level processing module and a simulator module determining estimated positions and behaviours of the individuals present in the area under surveillance ,
● a man-machine interface displaying a bidimensional overview of the area under surveillance and estimated positions of present individuals and their behaviours.

In an embodiment of the invention, the database may be comprised in a sensing and storage layer which further comprises a sensor concentrator for concentrating data output by the ID sensors, and a raw data bus for conveying sensor data to the sensor processing module.

In an embodiment of the invention, the sensor processing module may further comprise a tag processing module and an image processing module for acquiring, formatting and synchronizing data respectively coming said sensor concentrator and tracking sensors through the raw data bus.

In an embodiment of the invention, the processing layer may further comprise a metadata engine through which data are exchanged between said sensor processing module, simulator module and high-level processing module, and between these latter modules and said database, the metadata engine also sending to said interaction layer the data required for display of information to an operator, and receiving and managing queries from an operator input through the interaction layer.

In an embodiment of the invention, the interaction layer may further comprise a man-machine interface and an output module able to sound and/or display alarms to an operator.

In an embodiment of the invention, the processing layer may further comprise a processed data bus conveying data between said sensor processing module, simulator module and high-level processing module, the high-level processing module being exchanging data with the interaction layer and the database through said metadata engine.

In an embodiment of the invention, the data exchanged between the group consisting of metadata engine, sensor processing module, simulator module and the group consisting of said high-level processing module and interaction layer, may be conveyed through a processed data bus.

In an embodiment of the invention, the simulator module may further comprise a tag simulator module and a tracking simulator.

In an embodiment of the invention, the database may further comprise a multimedia database and a general database.

In an embodiment of the invention, the man-machine interface may display a main window comprising a bidimensional view of a part of the area under surveillance and individuals present therein.

In an embodiment of the invention, the man-machine interface may display a report window comprising a text report about a tracked individual selected by the operator through the man-machine interface.

In an embodiment of the invention, the man-machine interface may display a selection information window comprising summary information on an individual or group of individuals selected by the operator through the man-machine interface.

In an embodiment of the invention, the man-machine interface may display an area overview window comprising a bidimensional overview of the area under surveillance wherein the part thereof displayed on the main window is highlighted, and able to be displaced, zoomed in or zoomed out by the operator through the man-machine interface.

In an embodiment of the invention, the man-machine interface may display an alert panel window comprising a list of alerts.

In an embodiment of the invention, the man-machine interface may display a behaviour window allowing selection by the operator of typical behaviours.

In an embodiment of the invention, the man-machine interface may display a person list window comprising a list of the individuals being tracked.

In an embodiment of the invention, the database may receive data from external systems.

In an embodiment of the invention, the ID sensors may be are of the RFID type.

In an embodiment of the invention, the tracking sensors may be video cameras.

One further advantage of the invention is that it proposes resorting to integrated techniques based upon the use of various available off-the-shelf sensors, while requiring reasonable computational power.

One further advantage of the invention is that it provides the possibility for statistical approaches, for example on the daily frequentation of given subareas of the area under surveillance.

These and other characteristics and advantages of the invention will be made clearer in view of the detailed description given below of a preferred embodiment, provided by way of an illustrative and non-limiting example only, as well as the accompanying drawings in which:
- Figures 1 a and 1 b illustrate a schematic top view of a large area under surveillance, comprising a plurality of various sensors;
- Figure 2 illustrates a schematic block diagram of a system architecture according to an example embodiment of the invention;
- Figure 3 illustrates a more detailed schematic block of a system architecture according to an example embodiment of the invention;
- Figure 4 illustrates a flowchart outlining a typical process for tracking individuals according to an example embodiment of the invention;
- Figure 5 illustrates schematic snapshots of the display provided to an operator according to an example embodiment of the invention.

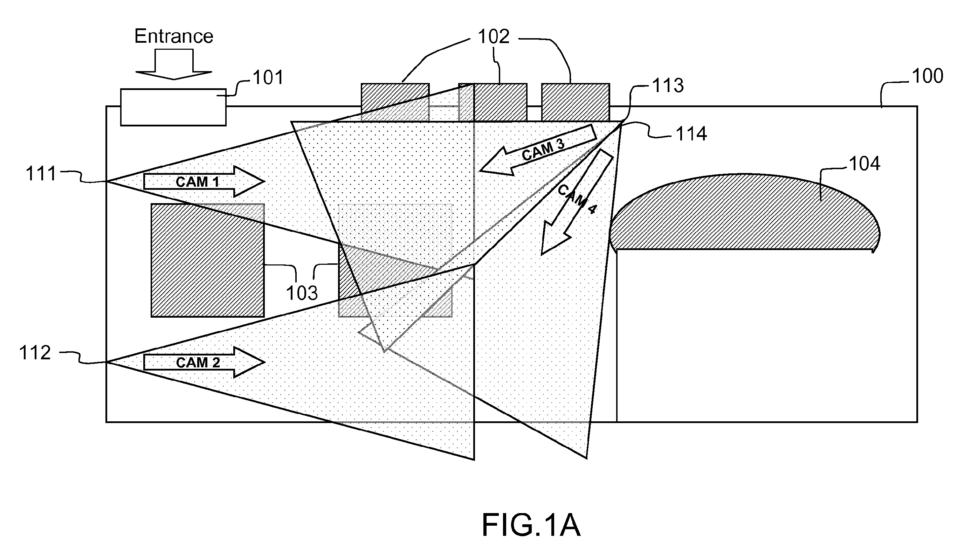

Figure 1a illustrates a schematic top view of a large area under surveillance, notably comprising a plurality of video cameras.

An area 100 comprises an entrance gate 101 and various building elements, such as interface of shops (or rooms) 102, internal shops 103, 104, or other structural elements such as pillars, etc. A plurality of video cameras 111, 112, 113, 114 are arranged at given positions within the area. The respective fields of vision of the video cameras 111, 112, 113, 114 are cones represented on Figure 1a by triangles. The video cameras' coverage areas may or may not overlap, and the overall surface covered by the cameras may or may not correspond to the total surface of the area under surveillance 100.

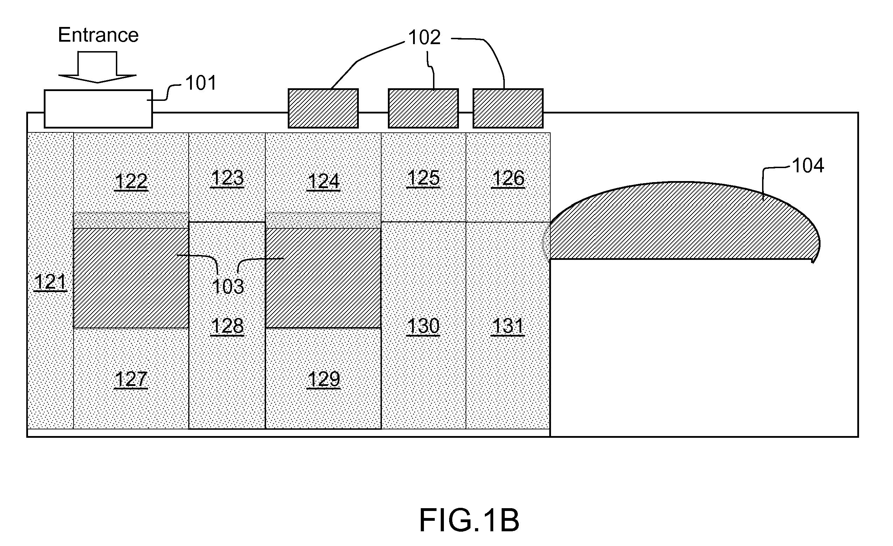

Figure 1b illustrates a schematic top view of the area 100, which is divided in a plurality of subareas 121 to 131, in which people can be identified and tracked by means of sensors, for example ID sensors. The subareas represent delimited areas wherein people are detected. The sensors may detect that a person has crossed the interface entering a specific area or may detect that a person is in the area. An ID sensor is a sensor that enables to cross reference the sensor to a person.

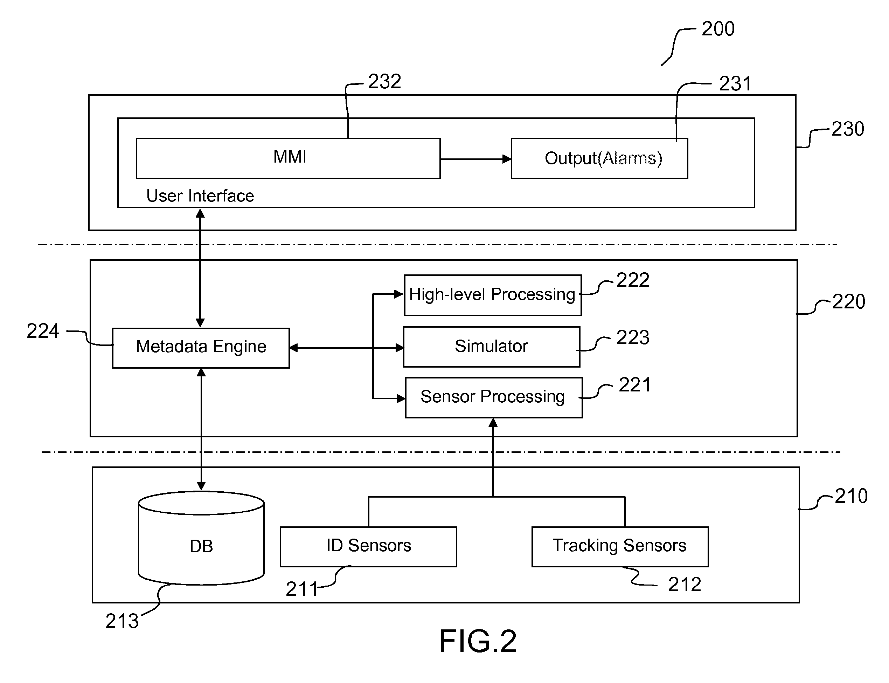

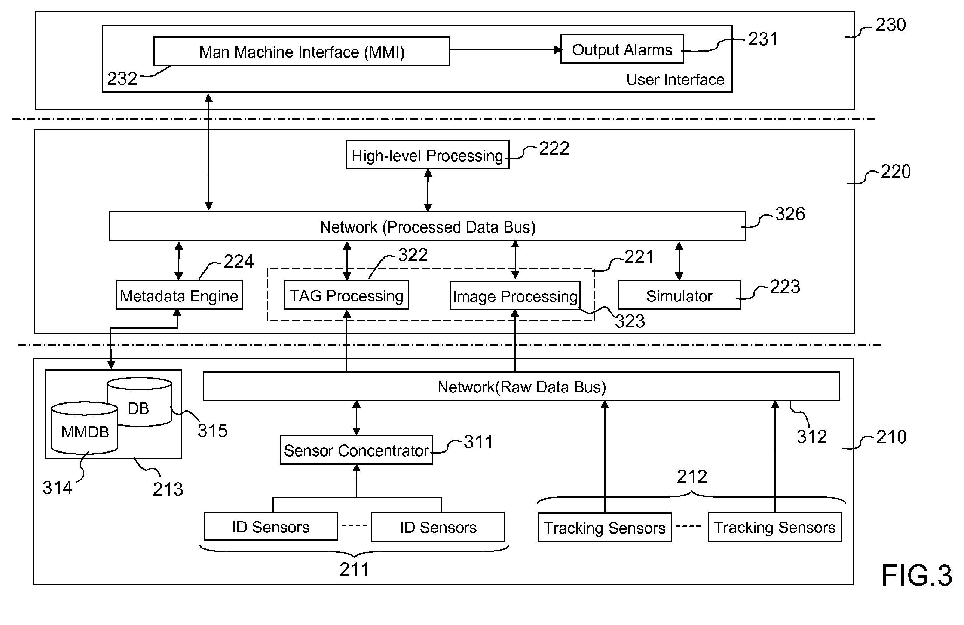

In reference to Figure 1 a, the video cameras 111, 112, 113, 114 are examples of tracking sensors. Whenever an object, for example an individual, is entering the sight of a video camera this object is assigned a video identification, hereinafter referred to as video ID. Also, the information provided by each video camera allows estimating the objects / individuals distance from the camera, as well as its direction compared to a reference direction. Thus, ground coordinates (x,y) can be calculated and assigned to the objects. In a further example embodiment; further processing can be carried out, so as to allow identification of individuals based upon images provided by the video camera, for example by means of facial recognition algorithms (in this case face recognition technology could be used as ID sensing). Estimation of the distance from the camera can for example be realized by means of algorithms performing a calculation of the object size from the ground and its relative position to known references. In another example embodiment, dedicated sensors can be attached to the video cameras for the purpose of measuring distance, such as infrared or laser sensors. Implementation of video ID assignment and all calculation algorithms will be described further in reference to the system architecture illustrated by Figures 2 and 3.

It shall be observed that obviously no exhaustive coverage is actually practicable, due to the presence of dead angles, the video camera sights being not necessarily covering the whole area of surveillance, but also due to the presence of various obstacles along their sights, such as building elements 103.

Now in reference to Figure 1 b, the use of ID sensors allows detecting people in the covered subareas 121 to 131. Whenever an individual is entering a subarea within the range of an ID sensor, the presence of the individual can be detected, his/her location - through (x,y) coordinates - estimated, and his/her ID known. When video tracking and RFID detection occurs at approximately the same (x,y) coordinates, it is possible to assign an actual ID to a tracked individual, who is assumed to be already assigned a video ID. Also, during the tracking process, information of the (x,y) coordinates for each object / individual on the ground is recorded. An artificial intelligence algorithm, hereinafter referred to as Al algorithm, may then allow building typical trajectories based upon this information. These trajectories may then provide an estimation source for the tracking sensors and associated processing modules, whenever such estimation is required. Corresponding estimation and calculation algorithms will be described further in reference to the system architecture illustrated by Figures 2 and 3.

Figure 2 illustrates a schematic block diagram of a system architecture according to an example embodiment of the invention.

According to an example embodiment, a system architecture comprises three layers.

A sensing and storage layer 210 comprises a plurality of ID sensors 211 and a plurality of tracking sensors 212. It also comprises a database 213 storing data exchanged with other modules as described below.

A processing layer 220 comprises a sensor processing module 221 receiving signals output from the ID sensors 211 and tracking sensors 212. The sensor processing module 221 exchanges data with a metadata engine 224. The sensor processing module 221 is also exchanging data with the database 213 through the metadata engine 224. The processing layer 220 further comprises a high level processing module 222 receiving data output sent by the sensor processing module 221 through the metadata engine 224. The high level processing module 222 is also exchanging data with the database 213 through the metadata engine 224. The processing layer 220 further comprises a simulator module 223, receiving data output by the high level processing module 222 via the metadata engine 224 and exchanging data with the database 213 through the metadata engine 224.

An interaction layer 230 comprises an output module 231 that displays alarms, warnings and special messages and a man-machine interface 232, hereinafter referred to as MMI 232. The output module 231 is receiving data output by the by the metadata engine 224. The MMI 232 sends data to the output module 231. The interaction layer also exchanges data with the database 213.

It shall be observed that the sensors 211, 212 presented in this example as parts of the sensor and storage layer 210, may also be considered as external to the system architecture of the present invention, and belonging to an already existing network of sensors. Similarly, the database 213 is presented in this example as part of the sensing and storage layer 210, but could as well be part of any other layer of the system, or even be part of a database already existing in an external system.

Figure 3 illustrates a more detailed schematic block of a system architecture according to an example embodiment of the invention.

The overall architecture described in Figure 3 corresponds to the more general structure described in Figure 2.

In an example embodiment, the sensing and storage layer 210 comprises a plurality of ID sensors 211 that are possibly part of a sensor network. Similarly, the plurality of tracking sensors 212 are possibly part of a sensor network. The data output by the ID sensors 211 are concentrated by means of a sensor concentrator 311. All data output by the sensor concentrator 311 and tracking sensors 212 are routed by a raw data bus 312. The database 213 may be actually divided into two databases: a multimedia database hereinafter referred to as MMDB 314, and a general database hereinafter referred to as GDB 315.

The processing layer 220 comprises the sensor processing module 221. The sensor processing module 221 may comprise a tag processing module 322 and an image processing module 323, the latter two being receiving data from the network raw data bus 312. The simulator module 223 may comprise an integrated tag simulator and tracking simulator, not represented on the figure. All data output from the metadata engine 224, tag processing module 322, image processing module 323 and simulator module 223, are routed by a processed data bus 326. The high level processing unit 222 is exchanging data through the processed data bus 326.

The following provides a description of the role of the functional blocks referred to above, as well as data fluxes circulating between them.

The ID sensors 211 send to the sensor concentrator 311 information related to identification tags of individuals in their coverage, as well as corresponding sensor identification and information related to the time at which the detections occur. The sensor concentrator 311 is gathering and homogenising all the data coming from all ID sensors 211.

The sensor concentrator 311 sends raw tag-related information through the network bus 312, to the tag processing module 322.

The tracking sensors 212 are all sending video streams through the network raw data bus 312, to the image processing module 323.

The role of the network bus 312 is to gather all data coming from all the types of sensors 211, 212, and forward said data to the processing modules 322, 323.

Before processing, all data are exchanged in their raw format to the respective processing modules 322, 323. After processing by the processing modules, data are delivered to the processed data bus 326 in an homogenized format.

The principle lies on the use of simplified multiple technology based upon both tracking and ID sensors, providing together complementary information. For efficiency and optimisation purposes it is thus convenient to have a similar format for the data flowing from each sensor technology to the metadata engine 224. The metadata engine 224 is also responsible for the aggregation of the various sources of data into a coherent database format for later querying and processing. As the two sensor technologies, i.e. ID sensors and tracking sensors do not deal exactly with the same type of information it is necessary to take into consideration the small format differences that may exist, depending upon the type of sensor technologies used. For example, the RFID and video data are synchronized, and all events are associated with a type of event, a time of event and a location of event. Therefore location coordinates and time stamp are common fields for all the sensor types, while for example sensor ID or degree of confidence are only relevant for video sensors. The ID sensors are all parts of a single sensor network thus, when captured, an ID is unique and unambiguous. The tracking sensor network is composed of discrete sensors that send raw video streams. These video streams are processed in order to capture and track individuals, by means of dedicated algorithms which may not have enough data for the purpose of disambiguating and clearly following/tracking the individuals at every instant of time and under every condition. For coherent tracking data aggregation it is thus necessary that the sensors are individually identified, and that the level of accuracy of the tracking of a given individual by a given sensor is known.

The processing modules 322, 323 provide the metadata engine 224 with description fragments through the processed data bus 326. The principle consists in using mechanisms to allow description of the media content, such as the ones provided by MPEG-7 description standard, provided by the Moving Picture Experts Group. For example, a description fragment can consist of a formatted message including tag-related information, that is: occurrence of an individual identification, at a given instant in time, with a given ID tag, etc. More specifically, media data fragments may be associated with various parameters that allow them or parts of them to be linked to other fragments. This structure enables the creation of coherently linked media fragments. In an environment such as an airport, a set of group parameters such as, for example: theme, behavior, status, location, adjacent locations, time stamp, ID may be used for fast search through the multimedia database 314.

The raw video data coming from the tracking sensors 212 is provided to the image processing module 323 through the raw data bus 312.

The metadata engine 224 manages the data and metadata stored in the GDB 315 and MMDB 314. The metadata engine 224 is responsible for receiving processed data from the sensors 211, 212 through processing modules 322, 323, and for storing them in the databases 314, 315. The processing modules 322, 323 send location and time information related to the signals they collect from the sensors 211, 212, while the high-level processing module 222 sends data to the metadata engine 224 related to trajectories, behaviours and deviations generating warnings and alarms if relevant. All said data are sent to the metadata engine 224 which manages storage in the databases 314, 315 and distribution to the user interface 230. Additionally to managing storing of sensing data, the module also relays the same data to the modules that need to use them, such as the MMI 232 and the high-level processing module 222. The high-level processing module 222 uses sensor data to build typical trajectories, evaluate movement behaviours, and warn about behaviour deviations. On the other hand it responds to requests from the other modules. For example, when the image processing module 323 looses track of an individual due to known physical constraints of the space, it may request and receive information about the typical trajectories and movements of individuals in that specific spot. The MMI 232 may for instance allow querying for individual's trajectories, proximity trajectories or typical crowd trajectories.

The metadata engine 224 manages the GDB 315 to provide the MMI 232 with the data required for the display of information to the system operator, through a graphical user interface, hereinafter referred to as GUI. Such data for instance comprise individual location, information blueprints and statistical data. An operator using the GUI is able to watch in real time the movement of people through the covered environment. This movement may be followed through a graphical representation of each individual's location. Colour codes may be used, enabling the operator to easily identify status or behaviours (for example a person walking will be represented with a colour different than that used for a person running). The operator may also access to any individual's trajectory information. The GDB 315 is also storing all relevant data computed by the metadata engine 224 and the high-level processing module 222. In a preferred embodiment, the GDB 315 may receive information from external modules or systems. For example, in the case the surveillance area is an airport, external systems may comprise the airline operator companies computer databases, customs computer systems, security check databases, luggage registration desk databases, etc. Some external systems may also comprise shopping mall databases. This additional information, if existing, together with the tracking information may be used for environment analysis and space optimisation. For example the simple placement of a mere magazine selling kiosk in an existing public area leads to changes in the trajectories of the individuals that go through that area. Previous knowledge of how people used to be moving prior to this change may help taking the decision about the best location for the kiosk, and either to change the initial trajectories or keep them as much unchanged as possible.

The MMDB 314 provides the MMI 232, through the metadata engine 224 and the process data bus 326, with references to the video content that is to be displayed thereby to the system operator. Video content may be displayed upon request from the GUI operator.

The metadata engine 224 receives from the processed data bus 326 requests or queries that are generated by the MMI 232 and/or the high-level processing module 222. The metadata engine 224 provides in turn to the high-level processing module 222 through the processed data bus 326, replies comprising metadata (such as location coordinates, IDs and timestamps) and/or video data references. In addition to this information the GUI also receives behaviour/status information. The MMI 232 may for example allow performing queries by video object, tag ID or fixed or mobile objects proximity.

The tag processing module 322 sends information about individual tag IDs and locations through the processed data bus 326, to the high-level processing module 222.

The image processing module 323 sends to the high-level processing module 222 information about individual locations in space, as well as the estimated level of certainty about the individual that is being tracked. The image processing module 323 receives from other modules through the metadata engine 224, for example from the high-level processing module 222, information that enables it to improve the estimated level of certainty.

The information communicated to the high-level processing module 222 through the processed data bus 326 may include the following:
- new object position (current (x, y) coordinates of an object),
- new object (a new video or tag object has been identified),
- RFID detection at a given location (an ID has been detected by an ID sensor: RFID tags may be detected continuously or discretely depending on the technology employed),

The high-level processing module 222 also calculates/estimates data that will be used internally, that is by itself, or externally by other modules:
- expected new position of an object (based on previous known typical trajectories it may estimate for each real time position of an object, the location/position where it will probably be next),
- expected occlusion (based on the object movement, on the moving objects that are in the close vicinity and on the knowledge of fixed obstacles existing in the environment, for example structural pillars),
- expected reappearance of an object.

The simulator module 223 generates data that enable the high-level processing module 222 to estimate typical behaviour patterns, based upon discrete events. With discrete events, time does not advance in regular intervals or steps. The simulated time, or time tag, is moved to the time of the next occurring event which is then processed; first the model state is changed, then event cancellations, if any, are performed, and finally further events, if any, are scheduled. In-between the occurrences of events, there is no change in the value of any state variable. Additionally the high-level processing module 222 is sent, through the processed data bus 326, simulated paths of individuals that are also generated by the simulator module 223.

The high-level processing module 222 may send to the MMI 232 upon request, through the metadata engine 224, information related to a new path and/or behaviour/trajectory change, updates of existing paths, any unexpected event, etc. It may also send to the metadata engine 224 for storage and later usage, information about typical and abnormal trajectories and rapid changes in status (for example consecutive fast changes in moving speed).

The information exchanged between the database 213 through the metadata engine 224 and high-level processing module 222 may relate to the map of the area under surveillance, on registered characteristics of objects or groups. Based on individuals' location data, the high-level processing module 222 sends to the multimedia module typical trajectories information, individual behaviour or status (walking, running risk behaviour, etc) and trajectory/behaviour changes.

The physical interfaces between the modules referred to below may for example be implemented through standard wired connections, such as standard Ethernet network connections, or wireless connections such as radiofrequency connections.

Several computations may be implemented through metadata engine 224. Said computations may include, based upon the example of an airport area:
- computation of the time of entrance and exit of objects, individuals or groups of individuals in controlled areas;
- computation of the time of entrance and exit of objects, individuals or groups in other given areas, such as malls, shops, etc.;
- identification of individuals having exceeding the time to reach the boarding counter;
- getting information about specific individual's data, such as their scheduled flight, destination, type of ticket, information about their check-in for example;
- computation of statistical data on the data collected, such as average time spent by individuals in given areas, number of people having entered given areas, number of people having bought articles in shopping malls, etc.;
- identification of the types of areas the individuals are in, for example identification of the types of commercial spaces the passengers are using in the airport area, for instance bars, restaurants, generic shops, etc.;
- identification of the areas being broadcasted messages, in which all individuals are present. Such areas are usually referred to as "PA zones";
- computation of a given's individual exact location through his/her ID, based upon the information provided by all available ID and tracking sensors. Such information may be associated with a calculated level of certainty;
- identification of individuals showing an abnormal or unexpected behaviour, and creation of a list of individuals with abnormal or unexpected behaviours, the behaviours being possibly associated with a risk level;
- computation of data produced by external systems: for instance, systems such as fire detection and alarm systems, or intrusion detection and alarm systems, access control systems, etc. may be interfaced with the system architecture of the present invention. Risk behaviours of individuals may for example be detected in emergency situations, such as individuals standing still, high concentration of individuals in restricted areas, non adherence of some individuals or groups to preferred emergency paths, etc.

The possibility of using the personal, institutional or general data necessary to compute the results described above may be restricted, due to legal and ethical issues.

The simulator module 223 comprises a software physical model for the area under surveillance, for the coverage of all the types of sensors that are involved in the system. The simulator module 223 also generates reference trajectories, based upon predetermined patterns, for example as a function of the type of individuals (e.g. airport staff people, passengers, visitors, etc.). The simulator module 223 also generates typical behaviours for the different types of individuals, for example each tag associated to an individual is associated to behavioural parameters, such as typical trajectories, allowed access areas, delays in waiting queues, time necessary for reaching the next tag readers, sequence of tag readers, typical delays in all different types of areas, etc. The reference patterns may be input from an external module, or be enriched on a permanent basis, based upon self learning algorithms. The software physical model may also take into consideration the typical behaviours of the different types of individuals, in the close vicinity of different types of locations, for example level with entrances or exits, with check-in counters, luggage retrieval areas, doors, gates, customs control points, security control points, X-Ray control points, waiting rooms, passenger lounges, chairs, ATM machines, stands and poster, restrooms, flight information displays, physical obstacles, shops of different types, structural pillars, restaurants and bars, restricted access areas, internet access points, VIP areas, known bottlenecks, queues, etc.

The high-level processing module 222 performs higher level computations, such as, for example:
- detection of changes in individuals trajectories, such as typical trajectories that become unused, or new trajectories taken by a majority of individuals, etc.;
- detection of social behaviours such as individuals unexpectedly join or group themselves on a frequent basis;
- detection of sudden and/or repeated changes in travelling speed by individuals and/or groups of individuals throughout the environment;
- upgrading of estimated expected trajectories and behaviours in real-time as a function of input information from the other modules fed with data from all types of sensors;
- computation of levels of certainty associated with individuals locations and trajectories.

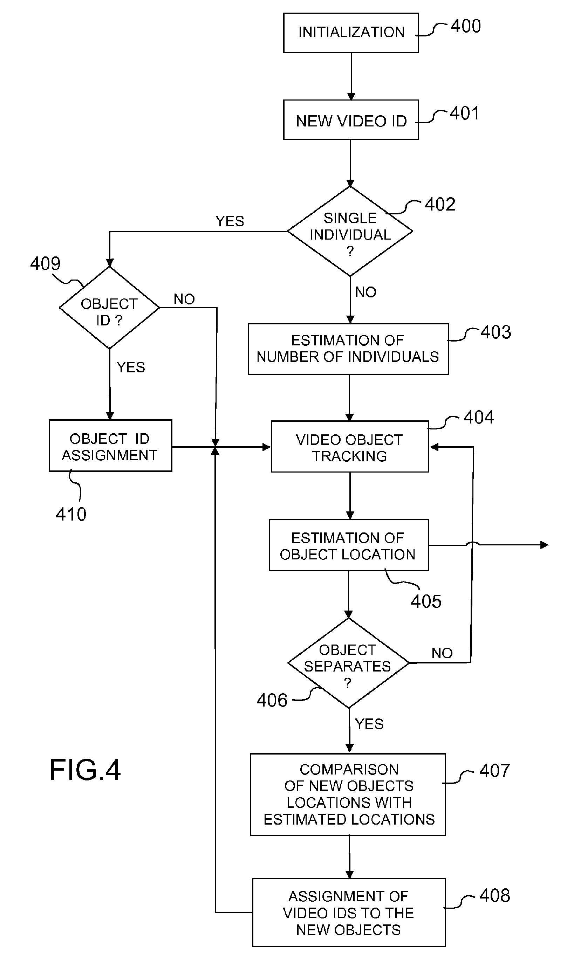

Figure 4 illustrates a flowchart outlining a typical process for tracking individuals according to an example embodiment of the invention.

The process flowchart in Figure 4 relates to the processing of video data. A system architecture according to one embodiment of the invention may indeed be merely based upon tracking sensors. For the sake of clarity, the description will first focus on such a simple embodiment. It will then be extended to the description of a system in which not only tracking sensors are used, but also other sensors such as ID sensors. It shall be understood that the present invention may even apply to a system in which only ID sensors are resorted to.

In the example embodiment of the invention illustrated by the flowchart of Figure 4, a preliminary step 400 initializes the scene under surveillance. Initialization is understood as the process of auto calibration of the background. Ideally, for video processing, the video processing algorithm should have a clear static view without any moving objects. As this is not possible on a practical point of view, the processing algorithm must be able to understand what objects are parts of the background and what objects are moving. A background calibration process mixes the process of frame differencing with motion estimation. From consecutive frames the first enables to determine what is different, that is to say: what may be moving, while the second enables to determine what is actually moving. In a first step 401 where it is assumed an object that may be an individual or a group of individuals, enters the sight of a tracking sensor, a new Video ID is assigned thereto. The estimation of whether a given object is a single individual or a plurality of individuals is based upon localization, through (x, y) coordinates, of the object present in the camera's sight, on the size of the object, that is: its height and width in pixels for example, and the previous knowledge of the space covered by this object. Based on this information, the system knows what shall be the expected size of a video object in a specific location in the image. Then a second step 402 checks whether the identified object is a group of individuals or a single individual:
● If the identified object is considered as a group of individuals, then a third step 403 estimates the number of individuals composing said group. If it is assumed that a detected video object corresponds to more than one individual, the corresponding blob is further analyzed. In addition to the location, known size of the object and expected size of the individuals, a further scan of the blob is performed. This further scan allows analyzing the overall pixel density of the rectangular area limiting the blob, as well as its vertical and horizontal pixel density. The space distribution of these parameters then allows drawing further conclusions about the number of individuals corresponding to the blob. If the segment is too dense and renders drawing of the conclusions too difficult, then an unidentified number of individuals may be assigned to the blob. Then a fourth step 404 tracks the object. Tracking corresponds to the process of following a specific blob through the screen without loosing its physical individual characteristics that enable it to be identified as an individual. The fourth step 404 is followed by a fifth step 405 in which the object location is estimated. Object location estimation is based upon a set of geometric transformations. In order to be able to use these transformations, the covered space is assumed to have been previously calibrated through a calibration process. After the calibration process, when an object is detected within a video frame, based on its dimensions and location, it is possible to estimate its location in the space. The process may consist of an inverse transformation from the camera view plane into the world (covered space) space, following a technique already known per se. In a sixth step 406, it is checked whether any object is separated from the group. If no object is detected to be separated from the group, then the process is going back to the fourth step 404 and continues tracking the object. If one or more object(s) is(are) detected to be separated from the group, then a seventh step 407 compares the locations of the newly separated objects, to an estimation of the locations of all objects associated to the group. In order to decrease the computational processing resources needed for video processing, location and/or identification of individuals that are detected and consequently tracked may sometimes be unclear, when analysing the processed video data, and in those cases the process of detection/tracking is based upon estimations. When clearly identified single individuals become totally or partially occluded by other individuals or by fixed objects, an additional algorithm may continue to estimate the individual's location based on its previously known movement characteristics, such as speed and direction. When the individual is detected again, a comparison between the re-appearance coordinates and the estimated coordinates is made, in order to validate the estimation. If, for example a change in direction during an occlusion happens, and impeaches to clearly identify the individual, then the algorithm may retain the missing ID until it is possible to assign it to an existing individual. A colour pattern comparison may also be used to validate ID attribution after total or partial occlusions. For example, the colours identified in the objects before occlusions can be compared thereafter in order to consolidate object identification. An eighth step 408 then assigns new Video IDs to the newly separated objects.
● If the identified object is considered as a single individual, then a ninth step 409 checks whether any Object ID is associated to the object. If an Object ID is indeed associated to the object, then this Object ID is associated to the Video ID of the object. If no Object ID corresponds to the object, then the process is going to the fourth step 404 and continues tracking the object.

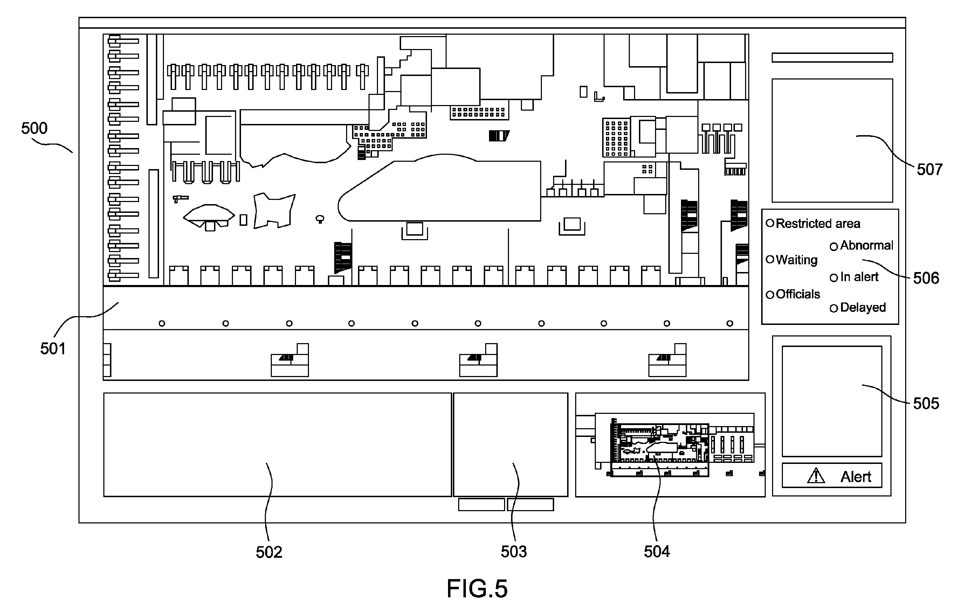

Figure 5 illustrates schematic snapshots of the display provided to an operator according to an example embodiment of the invention.

In an example embodiment, a display screen 500 may comprise a main window 501, a report window 502, a selection information window 503, an area overview window 504, an alert panel window 505, a behaviour window 506 and a person list window 507.

The main window 501 provides a top view of a selected part of the area of surveillance, or an exhaustive overview of the area of surveillance.

The report window 502 provides with detailed information on a selected tracked individual.

The selection information window 503 provides with summarized information on a selected individual or plurality of individuals.

The area overview window 504 provides with a top view of the whole area under surveillance, the selected part of the area of surveillance being displayed in the main window 501 can be matched by a rectangle on the area overview window 504.

The alert panel window 505 provides a list of the most recent alerts triggered by the tracking process.

The behaviour window 506 allows selection by an operator of typical behaviours.

The person list window 507 provides with a list of the individuals being tracked by the system.

The main window 501 displays a selected part of the area of surveillance, in a top-view letting all rooms, obstacles, etc. in the environment appear. Also, all the individuals and groups present in this zone appear in this view, the different individuals being for example differentiated by different symbols or different colours. The IDs of the individuals and groups may for example be superimposed to their corresponding symbols, or displayed in the close vicinity thereof. The operator may be able to select, through a dedicated interface, a given zone that is part of the displayed zone, simply by defining a window within the main window 501. The operator may also be able to select a given individual or group by clicking on the corresponding symbol on the display, for example to display information specifically related to this individual or group.

It is to be understood that the embodiments described above may equally be applied to other areas such as schools, hospitals, manufacturing plants, shopping malls, penitentiaries, subway stations, exhibition areas, stadiums, etc.

## Claims

1. A system architecture (200) for tracking individuals in crowded areas based upon a plurality of input individual ID sensors (211) and/or individual tracking sensors (212) placed at determined locations over an area under surveillance (100), said system architecture (200) comprising at least:
● a database (213),
● a processing layer (220) comprising at least a sensor processing module (221), a high-level processing module (222) and a simulator module (223) determining estimated positions and behaviours of the individuals present in the area under surveillance ,
● a man-machine interface (232) displaying a bidimensional overview of the area under surveillance (100) and estimated positions of present individuals and their behaviours.

2. The system architecture (200) of claim 1, wherein the database (213) is comprised in a sensing and storage layer (210) which further comprises a sensor concentrator (311) for concentrating data output by the ID sensors (211), and a raw data bus (312) for conveying sensor data to the sensor processing module (221).

3. The system architecture (200) of claim 2, wherein said sensor processing module (221) further comprises a tag processing module (322) and an image processing module (323) for acquiring, formatting and synchronizing data respectively coming said sensor concentrator (311) and tracking sensors (212) through the raw data bus (312).

4. The system architecture (200) of any of claims 1-3, wherein said processing layer (220) further comprises a metadata engine (224) through which data are exchanged between said sensor processing module (221), simulator module (223) and high-level processing module (222), and between these latter modules and said database (213), the metadata engine (224) also sending to said interaction layer (230) the data required for display of information to an operator, and receiving and managing queries from an operator input through the interaction layer (230).

5. The system architecture (200) of any of claims 1-4, wherein said interaction layer (230) further comprises a man-machine interface (232) and an output module (231) able to sound and/or display alarms to an operator.

6. The system architecture (200) of any of claims 3-5, wherein said processing layer (220) further comprises a processed data bus conveying data between said sensor processing module (221), simulator module (223) and high-level processing module (222), the high-level processing module (222) being exchanging data with the interaction layer (230) and the database (213) through said metadata engine (224).

7. The system architecture (200) of claim 6, wherein the data exchanged between the group consisting of metadata engine (224), sensor processing module (221), simulator module (223) and the group consisting of said high-level processing module (222) and interaction layer (230), are conveyed through a processed data bus (326).

8. The system architecture (200) of any of claims 1-7, wherein said simulator module (223) further comprises a tag simulator module (324) and a tracking simulator (325).

9. The system architecture (200) of any of claims 1-8, wherein said database (213) further comprises a multimedia database (314) and a general database (315).

10. The system architecture (200) of any of claims 1-9, wherein said man-machine interface (232) displays a main window (501) comprising a bidimensional view of a part of the area under surveillance (100) and individuals present therein.

11. The system architecture (200) of any of claims 1-10, wherein said man-machine interface (232) displays a report window (502) comprising a text report about a tracked individual selected by the operator through the man-machine interface (232).

12. The system architecture (200) of any of claims 1-11, wherein said man-machine interface (232) displays a selection information window (503) comprising summary information on an individual or group of individuals selected by the operator through the man-machine interface (232).

13. The system architecture (200) of any of claims 1-12, wherein said man-machine interface (232) displays an area overview window (504) comprising a bidimensional overview of the area under surveillance (100) wherein the part thereof displayed on the main window (501) is highlighted, and able to be displaced, zoomed in or zoomed out by the operator through the man-machine interface (232).

14. The system architecture (200) of any of claims 1-13, wherein said man-machine interface (232) displays an alert panel window (505) comprising a list of alerts.

15. The system architecture (200) of any of claims 1-14, wherein said man-machine interface (232) displays a behaviour window (506) allowing selection by the operator of typical behaviours.

16. The system architecture (200) of any of claims 1-15, wherein said man-machine interface (232) displays a person list window (507) comprising a list of the individuals being tracked.

17. The system architecture (200) of any of claims 1-16, wherein the database (214) receives data from external systems.

18. The system architecture (200) of any of claims 1-17, wherein the ID sensors (211) are of the RFID type.

19. The system architecture (200) of any of claims 1-18, wherein the tracking sensors (212) are video cameras.
